# EUROPÄISCHE PATENTSCHRIFT

(11) **EP 0 771 680 B1**
(45) Veröffentlichungstag und Bekanntmachung des Hinweises auf die Patenterteilung: **09.06.1999**
(21) Anmeldenummer: 96116967.9
(22) Anmeldetag: 23.10.1996
(51) Int. Cl.: B60H 1/00, B60K 37/00

(54) **Bediengerät**
Operating apparatus
Appareil de commande

(30) Priorität: 31.10.1995 DE 19540553
(43) Veröffentlichungstag der Anmeldung: 07.05.1997
(73) Patentinhaber: Behr GmbH & Co., D-70469 Stuttgart (DE)
(72) Erfinder: Lochmahr, Karl, 71665 Vaihingen (DE); Rauland, Werner, Dipl.-Ing., 75181 Pforzheim (DE)
(74) Vertreter: Riedel, Peter, Dipl.-Ing.

(56) Entgegenhaltungen:
- DE-A- 3 107 722
- DE-A- 19 514 976
- US-A- 4 191 242
- ATZ AUTOMOBILTECHNISCHE ZEITSCHRIFT, Bd. 90, Nr. 3, 1.März 1988, Seiten 109/110, 112, 114-116, XP000565075 GROHMANN K ET AL: "KLIMAAUTOMATIK DER NEUEN 7ER BAUREIHE VON BMW THE AUTOMATIC HEAT AND AIR CONDITIONER FROM THE NEW 7' SERIES BMW"

## Beschreibung

Die Erfindung betrifft ein Bediengerät für die Steuerung von Einrichtungen und/oder Aggregaten in einem Kraftfahrzeug, insbesondere einer Heizungs- und/oder Klimaanlage der im Oberbegriff des Anspruchs 1 angegebenen Gattung.

In der gattungsgemäßen DE 31 07 722 A1 ist ein Bediengerät für eine Heiz- und Klimaanlage eines Kraftfahrzeugs beschrieben, das einen Temperaturwählschalter sowie mehrere Drucktasten zur Auswahl eines von mehreren gespeicherten Programmen umfaßt. Den verschiedenen Drucktasten sind zur Kennzeichnung charakteristische Symbole zugeordnet, durch die eine visuelle Bestimmung der jeweiligen Taste möglich ist. Bei ungünstigen Lichtverhältnissen, bspw. bei starker Sonneneinstrahlung oder Spiegelung der Oberfläche, sind derartige Symbole schlecht zu erkennen, so daß es zu Fehlbedienungen kommen kann. Ein längeres Suchen nach der jeweils zutreffenden Drucktaste lenkt den Fahrer zu stark ab, so daß die Fahrsicherheit beeinträchtigt sein kann.

In dem Aufsatz von Grohmann, Kess, Egle "Klimaautomatik der neuen 7er Baureihe von BMW", ATZ Automobiltechnische Zeitschrift 90 (1988), Heft 3, ist eine Betätigungseinheit für eine Klimaanlage beschrieben, wobei die Betätigungselemente durch Symbole einer leicht verständlichen Bilderschrift gekennzeichnet sind. Die Betätigungselemente umfassen sowohl Stellräder als auch Kurzhubtasten, wobei letztere nach einem bestimmten Rasthub einrasten, so daß durch Ertasten festgestellt werden kann, ob sich die jeweilige Taste in der gedrückten oder nicht gedrückten Funktionsstellung befindet. Mit Einschalten des Fahrlichtes werden die Betätigungselemente mit Hilfe von LEDs beleuchtet. Bei der bekannten Anordnung ist es neben dem visuellen Auffinden der Betätigungselemente möglich, den jeweiligen Schaltzustand der Drucktasten zu ertasten, der Fahrer kann jedoch bei schlechten Lichtverhältnissen nicht feststellen, um welche Taste es sich handelt. So kann es zu Verwechslungen der jeweiligen Tasten bei nur flüchtigem Hinsehen kommen, so daß der Fahrer vom Straßengeschehen abgelenkt wird, um visuell eine eindeutige Zuordnung der Betätigungselemente vorzunehmen.

Der vorliegenden Erfindung liegt die Aufgabe zugrunde, ein Bediengerät für die Steuerung von Einrichtungen und/oder Aggregaten in einem Kraftfahrzeug der im Oberbegriff des Anspruchs 1 angegebenen Gattung zu schaffen, bei dem ein sichereres Auffinden und Erkennen der Bedienelemente ohne Ablenken des Augenmerks des Fahrers vom Straßenverkehr möglich ist.

Diese Aufgabe wird durch ein Bediengerät mit den Merkmalen des Anspruchs 1 gelöst.

Die wesentlichen Vorteile der Erfindung sind darin zu sehen, daß durch die Mittel zur haptischen Unterscheidung eine sogenannte Blindbedienbarkeit gegeben ist, d. h., daß auch ohne visuelle Unterstützung das jeweilige Bedienelement zweifelsfrei erkennbar ist. Dadurch werden Fehlbedienungen vermieden und die Fahrsicherheit erhöht.

Gemäß der Erfindung ist an der Bedienoberfläche eine Orientierungsleiste mit den Bedienelementen zugeordneten Kennfeldern mit haptisch kodierten Oberflächen angeordnet. Eine solche Orientierungsleiste kann anstelle haptisch kodierter Bedienelemente oder zusätzlich vorgesehen werden. Eine solche Orientierungsleiste ermöglicht bereits vor der eigentlichen Berührung des Bedienelementes ein Erkennen, auf welches Bedienelement sich der Finger zubewegt. Da bei dem Vorhandensein einer Orientierungsleiste die Drucktasten oder Drehknöpfe selbst keine haptische Kodierung aufweisen müssen, können gegebenenfalls gleiche Tasten an verschiedenen Stellen des Bediengerätes Verwendung finden, so daß die Teilevielfalt etwas reduziert wird.

Als besonders zweckmäßig wird angesehen, daß die Orientierungsleiste sich unterhalb der jeweiligen Bedienelemente, vorzugsweise entlang des unteren Randes der Bedienoberfläche, erstreckt. Dieser Randbereich des Bediengerätes ist für die Fingerspitzen am leichtesten zugänglich und liegt ergonomisch günstig. In den Fingerspitzen ist eine besonders große Dichte der Tastrezeptoren, so daß in diesem Bereich eine besondere Sensibilität gegeben ist. Um einzelne Kennfelder oder Gruppen von Kennfeldern leichter zu unterscheiden, wird vorgeschlagen, daß zwischen den Kennfeldern oder Gruppen von Kennfeldern Mittel zur Abgrenzung vorgesehen sind. Diese Mittel sind vorzugsweise durch leicht erhöhte und im wesentlichen quer zur Längsrichtung der Orientierungsleiste verlaufende Stege gebildet. Durch die lediglich leicht über die Oberfläche der Kennfelder erhöhten Stege wird das Ertasten der Kennfelder in keiner Weise behindert und andererseits erleichtert die deutlich ertastbare Abgrenzung die Zuordnung. Es ist auch möglich, die Drucktasten in den Kennfeldern anzuordnen, wodurch Platz gespart und die Bedienbarkeit erleichtert wird.

Zur Kodierung der Oberflächen an den Bedienelementen oder Kennfeldern kann vorzugsweise eine charakteristische Struktur, bspw. durch Rauhigkeit, ein Muster oder Richtung eines Musters, vorgesehen sein. Eine weitere Maßnahme zur Kodierung der Oberflächen besteht darin, an den Oberflächen benachbarter Drucktasten oder Kennfelder eine für die Hautsinne deutlich unterschiedliche Temperatur zu erzeugen. Dies kann bspw. mit Hilfe eines Peltier-Elementes erfolgen.

Gemäß einer ersten Ausführungsform der Erfindung weisen die Bedienelemente eine haptisch kodierte Oberfläche auf. Dadurch ist das Bedienelement selbst individuell gekennzeichnet. Zweckmäßigerweise sind zumindest ein Teil der Bedienelemente eines Bediengerätes als Drucktasten mit charakteristischen Frontflächen ausgebildet. Derartige Frontflächenstrukturen lassen sich bei der Herstellung der Drucktasten ohne nennenswerten Mehraufwand realisieren. Aus unterschiedlichen Gründen, bspw. Design oder Ergonomie, kann es erforderlich sein, ein oder mehrere Bedienelemente als Drehknopf auszubilden. Damit auch der Drehknopf bezüglich der verschiedenen einzustellenden Funktionen die haptische Unterscheidung bietet, ist der Drehknopf mit einer partiell kodierten Teilfläche ausgebildet.

Um die eingestellte Betriebsfunktion eines Bedienelementes auch visuell deutlich zu machen, ist es vorteilhaft, einem oder mehreren Bedienelementen ein Display zuzuordnen, in dem die eingestellte Funktion angezeigt wird. Für die stufenlos oder in mehreren Stufen einstellbaren Funktionen wird es als zweckmäßig angesehen, derselben Funktion zwei benachbarte Drucktasten mit gegenläufiger Verstellrichtung zuzuordnen, d. h. es wird eine Taste zur Erhöhung des Wertes der betreffenden Funktion und die andere Taste zur Verringerung des Wertes benutzt. Um diese nebeneinander liegenden Drucktasten auf geeignete Weise zu kodieren, wird es als vorteilhaft angesehen, daß die Frontfläche einer Drucktaste mit einer konkaven Vertiefung und die Frontfläche der anderen Drucktaste mit einer konvexen Wölbung versehen sind. Auf diese Weise gestaltete Drucktasten eignen sich insbesondere als Sollwertsteller zur Temperatureinstellung, wobei diesen Drucktasten ein Display zugeordnet ist, das als digitale Temperaturanzeige dient.

In Fahrzeugen mit höheren Ansprüchen an den Heizungs- bzw. Klimatisierungskomfort sollte die in den Fahrzeugraum einströmende Luft individuell zum Fahrer und Beifahrer einstellbar sein. Hierzu ist es zweckmäßig, in dem Bediengerät zwei Anordnungen von Drucktasten und Temperaturanzeige für die Temperatureinstellung vorzusehen, wobei eine Anordnung zur Einstellung des Heizungs- bzw. Klimatisierungsbedarfs für die Fahrerseite und die andere Anordnung für die Beifahrerseite dient. Um eine klare Differenzierung zwischen den der Beifahrerseite zugeordneten Drucktasten und den der Fahrerseite zugeordneten Drucktasten zu schaffen, ist es vorteilhaft, daß die Bedienoberfläche in zwei Bedienbereiche unterteilt ist, wobei jeder Bedienbereich im wesentlichen eine Ebene bildet und die beiden Ebenen in einem Winkel zueinander angeordnet sind. Mittels einer solchen Unterteilung der Bedienoberfläche in Bedienbereiche kann auch eine Unterteilung nach anderen Kriterien erfolgen, bspw. in einen Bereich mit Bedienelementen, die der Sicherheit im Verkehr dienen (Windschutzscheiben-Defrostung, Heckscheibenheizung) und Bedienelementen für das persönliche Behaglichkeitsempfinden (Innenraumtemperatur, Gebläseleistung, Luftverteilung). Durch eine solche Anordnung von einen Winkel zueinander einschließenden Ebenen ist es zweckmäßig, den Bedienbereich mit den für den Fahrer besonders relevanten Bedienelementen derart anzuordnen, daß die Bedienfeldoberfläche möglichst senkrecht zur Blickrichtung des Fahrers verläuft. Hierzu sollte die Berührungslinie beider Ebenen im wesentlichen vertikal verlaufen und der Winkel zwischen den Vorderseiten der Ebenen ca. 185° bis 200° betragen.

Bei einer schräg zur Armaturenbrettebene verlaufenden Bedienoberfläche ist es vorteilhaft, daß die Orientierungsleiste - in der Draufsicht - zumindest in einem wesentlichen Abschnitt ihrer Längserstreckung eine keilförmige Fläche bildet, die auf einer Seite eine größere Tiefe aufweist als auf der anderen Seite. Dadurch ergeben sich unterschiedlich große Kennfelder, so daß bereits auch die Größe der Kennfelder als zusätzliches Merkmal für die haptische Unterscheidung dient. Aus ergonomischen Gründen ist es zweckmäßig, die Orientierungsleiste in einem Winkel zur Bedienoberfläche anzuordnen, wobei als besonders zweckmäßig ein Winkel zwischen der Bedienoberfläche und der Orientierungsleiste von ca. 100° bis 140° angesehen wird. Um den Fahrer über die von ihm vorgenommene Einstellung zu unterrichten, sind zweckmäßigerweise Mittel zur akustischen Rückmeldung einer an einem der Bedienelemente vorgenommenen Einstellung vorgesehen.

Ausführungsbeispiele der Erfindung sind nachstehend anhand der Zeichnung näher erläutert. In der Zeichnung zeigt:
- Fig. 1: ein Bediengerät mit mehreren Tasten, Displays und einer Orientierungsleiste unterhalb der Tasten,
- Fig. 2: die Vorderansicht eines Bediengerätes mit Tasten und Displays,
- Fig. 3: einen Schnitt entlang der Linie III - III in Fig. 2,
- Fig. 4: einen Schnitt entlang der Linie IV - IV in Fig. 2,
- Fig. 5: eine Ausführungsvariante zu Fig. 1.

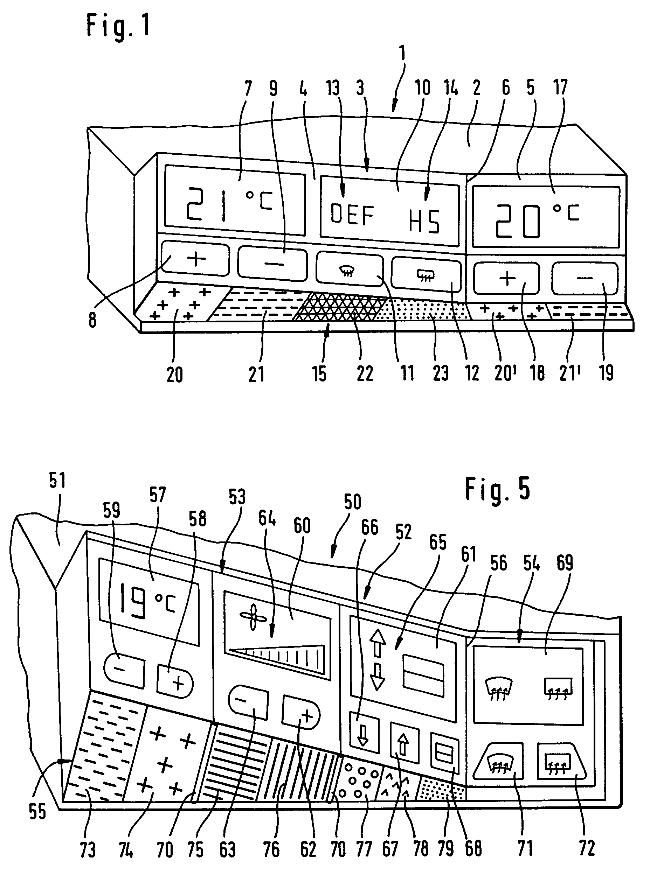

In Fig. 1 ist ein Bediengerät 1 dargestellt, das an einem Gehäuse 2 eine Bedienoberfläche 3 aufweist. Die visuellen Zwecken dienende Fläche der Bedienoberfläche 3 sollte senkrecht zum Sehstrahl des Fahrers angeordnet sein. Die Bedienoberfläche ist in zwei Bedienbereiche 4 und 5 gegliedert, wobei der Bedienbereich 4 dem Fahrer und der Bedienbereich 5 dem Beifahrer zugeordnet ist. Die Bedienbereiche 4 und 5 sind in Ebenen angeordnet, die im Winkel zueinander verlaufen, wobei die Ebene des Bedienbereichs 5 parallel zur Ebene des Armaturenbretts verläuft. Der Bedienbereich 4 ist durch seine Anordnung im Winkel zu dem Bedienbereich 5 dem Fahrer zugewandt, so daß dessen Blick möglichst senkrecht auf den Bedienbereich 4 der Bedienoberfläche 3 fällt.

Der Bedienbereich 4 umfaßt ein Display 7 zur Anzeige einer Temperatur. Dieses Display 7 ist zwei Drucktasten 8 und 9 zugeordnet, die als Sollwertsteller für die gewünschte Innenraumtemperatur auf der Fahrerseite dienen. Dabei ist die Drucktaste 8 zur Erhöhung des Sollwertes und die Drucktaste 9 zur Reduzierung des Sollwertes vorgesehen. Außerdem befindet sich im Bedienbereich 4 der Bedienoberfläche 3 ein Display 10, das sich oberhalb einer Drucktaste für die Windschutzscheiben-Defrostung und einer Drucktaste 12 für die Heckscheibenheizung erstreckt. Das Display 10 umfaßt eine Anzeige 13 mit den Buchstaben DEF und eine Anzeige 14 mit den Buchstaben HS, die jeweils nur im Einschaltzustand der betreffenden Drucktaste 11 oder 12 erscheinen.

In dem Bedienbereich 5 der Bedienoberfläche 3 sind ein Display 17 zur Anzeige eines Sollwerts der Fahrzeuginnenraumtemperatur auf der Beifahrerseite sowie Drucktasten 18 und 19 angeordnet, wobei diese Drucktasten den Drucktasten 8 und 9 entsprechen und die gleiche Funktion erfüllen, allerdings zur Einstellung des Temperatursollwertes für die Beifahrerseite. Entlang des unteren Randes der Bedienoberfläche 3 erstreckt sich an dem Gehäuse 2 eine Orientierungsleiste 15, die mehrere jeweils einer Drucktaste zugeordnete Kennfelder 20, 21, 22, 23 sowie 20', 21' umfaßt. Diese Kennfelder besitzen Oberflächen mit jeweils charakteristischer Struktur, so daß bei Berührung eines Kennfeldes durch einen Finger der Bedienungsperson aufgrund der Oberflächenbeschaffenheit des jeweiligen Kennfeldes feststellbar ist, vor welcher der Drucktasten 8, 9, 11, 12, bzw. 18, 19 sich der Finger befindet. Auf diese Weise sind die jeweiligen Drucktasten haptisch unterscheidbar, so daß eine genaue Zuordnung auch ohne visuelle Unterstützung zweifelsfrei möglich ist.

Im Beispiel der Fig. 1 sind an der Oberfläche des Kennfeldes 20 reliefartig hervorstehende Kreuze als Plus-Zeichen vorgesehen, was der Funktion der zugehörigen Drucktaste entspricht. Die Oberfläche des Kennfeldes 21 ist mit reliefartig hervorgehobenen, querverlaufenden kurzen Strichen vorgesehen, die ein Minus-Zeichen charakterisieren. Aufgrund der wesentlich größeren Anzahl der reliefartigen Erhebungen im Kennfeld 21 gegenüber denjenigen im Kennfeld 20 ist selbst dann eine haptische Unterscheidung möglich, wenn die Form der reliefartigen Kreuze (Plus-Zeichen) nicht eindeutig wahrnehmbar ist. Das Kennfeld 20 besitzt eine Riffelung mit aneinandergereihten spitzen Erhebungen. An der Oberfläche des Kennfeldes 23 befindet sich eine Vielzahl punktförmiger Noppen; es könnte stattdessen jedoch auch eine angerauhte Oberfläche vorgesehen sein.

Aufgrund der deutlich voneinander abweichenden Strukturen der Kennfelder 20 bis 23 kann über die Hautsinne, z. B. Kitzel, Vibration, Wärme- und Kältesinn, das jeweilige Kennfeld aufgrund seiner kodierten Oberfläche zweifelsfrei geortet werden. Den Drucktasten 18 und 19 sind Kennfelder 20', 21' an der Orientierungsleiste 15 zugeordnet, wobei die Oberflächenstruktur jeweils den Kennfeldern 20, 21 entspricht. Da die Orientierungsleiste 15 in der Draufsicht zumindest in einem wesentlichen Abschnitt ihrer Längserstreckung eine keilförmige Fläche bildet, die auf einer Seite eine größere Tiefe aufweist als auf der anderen Seite, sind die Kennfelder 20 und 21 deutlich größer als die Kennfelder 20', 21', so daß auch ein Unterschied zwischen den Feldern 20 und 20' ertastbar ist.

Selbstverständlich kann die Bedienoberfläche 3 auch weitere Drucktasten und gegebenenfalls auch Schalter für zusätzliche Funktionen umfassen, beispielsweise für Frischluft- oder Umluftbetrieb.

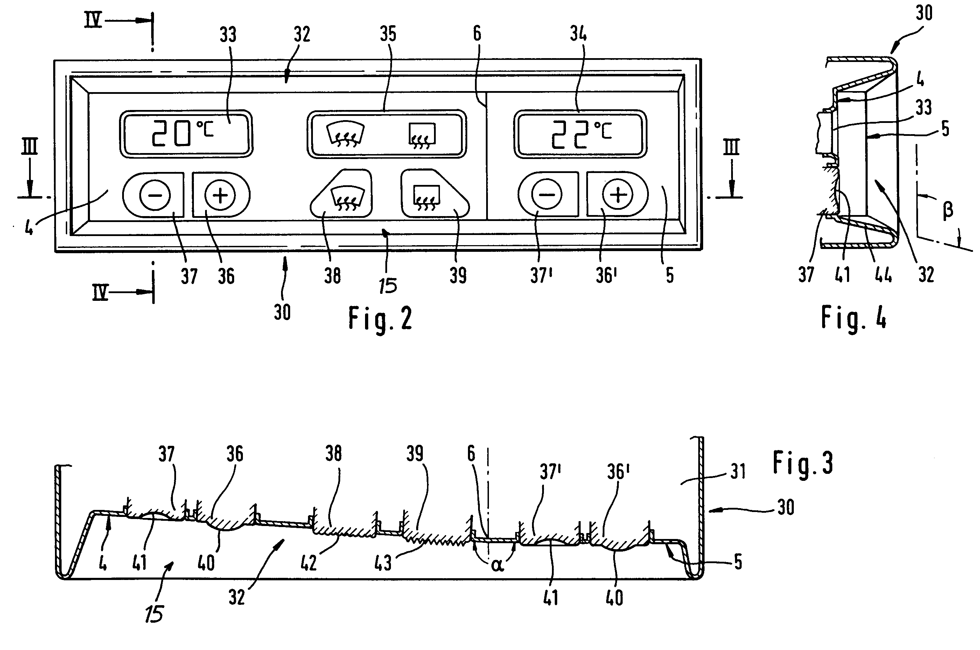

Die Fig. 2 zeigt die Vorderansicht eines Bediengerätes 30, das ein Gehäuse 31 und mehrere an einer Bedienoberfläche 32 angeordnete Displays 33, 34, 35 und Drucktasten 36, 37, 38, 39 sowie 36', 37' umfaßt. Die Bedienoberfläche 32 umfaßt wiederum die bereits zu Fig. 1 beschriebenen Bedienbereiche 4 und 5. Unterhalb der Bedienbereiche 4 und 5 erstreckt sich eine Orientierungsleiste 15, wie sie zu Fig. 1 beschrieben ist, sie ist daher in Fig. 2 nicht im einzelnen gezeigt. Gegenüber der zuvor beschriebenen Ausführung sind die Displays 33, 34, 35 anders gestaltet, ebenso wie die Drucktasten 36 bis 39, sie dienen jedoch entsprechend ihrer Anordnung dem gleichen Zweck.

Im Gegensatz zu der bereits beschriebenen Ausführung sind bei dem Ausführungsbeispiel der Fig. 2 die Drucktaten 37 bis 39 an ihren Frontflächen mit einer charakteristischen Struktur versehen, so daß bei Berührung der Drucktasten 37 bis 39 eine haptische Unterscheidung möglich ist. Diese haptisch kodierten Oberflächen werden durch die Darstellung in Fig. 3 deutlich, die einen Schnitt entlang der Linie III - III in Fig. 2 zeigt. Aus dieser Darstellung wird auch deutlich, daß die Bedienbereiche 4 und 5 der Bedienoberfläche 3 in einem Winkel α zueinander angeordnet sind, wobei am Schnittpunkt der beiden Ebenen eine Berührungslinie 6 gebildet wird. Der Winkel α beträgt im Ausführungsbeispiel 185°, es kann jedoch durchaus ein Winkel α bis etwa 200° vorgesehen werden.

Die Frontflächen der Drucktasten 36 bis 39 sind mit einer haptischen Kodierung versehen, so daß die Drucktasten selbst, also unabhängig von der Orientierungsleiste haptisch unterscheidbar sind. Die Drucktaste 36 zur Erhöhung des Sollwertes für die Innenraumtemperatur auf der Fahrerseite weist eine konvexe Wölbung 40 auf und in gleicher Weise ist die Drucktaste 36', die die gleiche Funktion für die Innenraumtemperatur der Beifahrerseite hat, gestaltet. Die Drucktaste 37, dient zur Reduzierung des Sollwertes für die Innenraumtemperatur und besitzt an ihrer Frontfläche eine konkave Vertiefung 41; die gleiche Form weist die Drucktaste 37' im Bedienbereich 5 auf.

Die Drucktaste 38 für die Windschutzscheiben-Defrostung ist an ihrer Frontfläche mit einer Noppenstruktur 42 versehen. An der Frontfläche der Drucktaste 39 für die Heckscheibenheizung ist ein Noppenmuster mit spitzen Noppen vorgesehen. Somit unterscheiden sich alle Drucktasten 37 bis 39, die dem Bedienbereich 4 zugeordnet sind, durch ihre Frontflächenstruktur, die ohne visuelle Hilfe zweifelsfrei geortet werden können. Daß die Drucktasten 36', 37' die gleiche charakteristische Frontfläche aufweisen wie die Drucktasten 36 und 37 im Bedienbereich 4, führt nicht zu Verwechslungen, da die Drucktasten mit gleichen Frontflächen unterschiedlichen Bedienbereichen 4 und 5 zugeordnet sind.

In Fig. 4 ist ein Schnitt entlang der Linie IV - IV der Fig. 2 gezeigt. In dem Gehäuse 31 des Bediengerätes 30 befindet sich bezogen auf die Vorderkante etwas zurückversetzt die Bedienoberfläche 32 mit den Bedienbereichen 4 und 5. Im Bedienbereich 4 ist das Display 33 und die Drucktaste 37 mit ihrer an der Frontseite befindlichen konkaven Vertiefung 41 angeordnet. Entlang des unteren Randes der Bedienoberfläche 32 erstreckt sich eine zur Vorderkante des Gehäuses 31 schräg abfallende Fläche 44, die die Führung des Fingers der Bedienungsperson zu den Drucktasten hin erleichtert. Diese Fläche 44 ist als Orientierungsfläche mit Kennfeldern gestaltet, wie dies bereits zu Fig. 1 beschrieben ist. Es ist also durchaus möglich, die Drucktasten 36 bis 39 mit einer haptisch kodierten Frontfläche zu versehen und zusätzlich eine Orientierungsleiste mit Kennfeldern anzuordnen. Dabei sollten die Oberflächen der Kennfelder die gleiche Struktur aufweisen wie die jeweilige Drucktaste, der das Kennfeld zugeordnet ist. Der Winkel β, den die Schrägfläche 44 zu der Bedienoberfläche 32 aufweist, beträgt im Ausführungsbeispiel ca. 105°, dieser Winkel kann jedoch je nach Ausführung des Bediengerätes zwischen 100° und 140° betragen.

Die Fig. 5 zeigt ein Bediengerät 50, bei dem an der Vorderseite eines Gehäuses 51 eine Bedienoberfläche 52 gebildet ist. Die Bedienoberfläche 52 umfaßt einen Bedienbereich 53 und einen Bedienbereich 54, die in zwei im Winkel zueinander verlaufenden Ebenen angeordnet sind. Zwischen den Bedienbereichen 53 und 54 ist eine Berührungslinie 56 gebildet. Der Bedienbereich 53 umfaßt ein Display 57 zur Anzeige des Sollwerts für die Fahrzeuginnenraumtemperatur. Unter dem Display 57 befinden sich Drucktasten 58 und 59, die zur Erhöhung bzw. Reduzierung des Sollwerts dienen.

Neben dem Display 57 ist ein weiteres Display 60 angeordnet, das eine Anzeige 64 für die momentan eingestellte Gebläsedrehzahl enthält. Unterhalb des Displays 60 befinden sich Drucktasten 62 und 63, die zur Erhöhung bzw. Reduzierung der Gebläsedrehzahl dienen. Außerdem umfaßt der Bedienbereich 53 ein Display 61 mit einer Anzeige 65 über die eingestellte Luftverteilung. Unterhalb des Displays 61 befinden sich drei Drucktasten 66, 67, 68, mittels denen die Luftverteilung zu Fußraumdüsen, oberen Ausströmern oder eine bevorzugte Grundposition der Luftverteilung aller Ausströmdüsen eingestellt werden kann. Die in dem Bedienbereich 53 enthaltenen Displays 57, 64, 61 und Drucktasten 58, 59, 62, 63, 66, 67, 68 dienen zur Einstellung der Heizungs- oder Klimaanlage nach dem persönlichen Behaglichkeitsgefühl des Fahrers.

In dem Bedienbereich 54 befindet sich ein Display 69 mit zwei Drucktasten 71 und 72, wobei die Drucktaste 71 für die Windschutzscheiben-Defrostung und die Drucktaste 72 für die Heckscheibenheizung vorgesehen sind. Der Betriebszustand der jeweiligen Funktion wird an dem Display 69 angezeigt. Somit umfaßt der Bedienbereich 54 diejenigen Drucktasten und Anzeigen der die Fahrsicherheit betreffenden Funktionen, nämlich freie Sicht durch die Windschutzscheibe und durch die Heckscheibe.

Entlang des unteren Randes des Bedienbereichs 53 erstreckt sich eine Orientierungsleiste 55 mit keilförmiger Oberfläche, wobei die Orientierungsleiste bis zu der Berührungslinie 56 der beiden Bedienbereiche 53 und 54 reicht. Jeder der Drucktasten 58, 59, 62, 63 und 66 bis 68 ist ein Kennfeld 73, 74, 75, 76, 77, 78, 79 zugeordnet, wobei diese Kennfelder eine charakteristisch strukturierte Oberfläche aufweisen, durch die die jeweilige Drucktaste haptich bestimmbar ist. Zur Erleichterung der Orientierung sind Gruppen von Kennfeldern gebildet, zwischen denen Mittel zur Abgrenzung vorgesehen sind. Diese Mittel zur Abgrenzung werden durch leicht erhöhte und im wesentlichen quer zur Längsrichtung der Orientierungsleiste 55 verlaufende Stege 70 gebildet. Durch diese Stege 70 sind somit die Kennfelder 73 und 74 zu einer Gruppe "Temperatureinstellung", die Kennfelder 75 und 76 zu einer Gruppe "Gebläsedrehzahleinstellung" und die Kennfelder 77 bis 79 zu einer Gruppe "Luftverteilung" zusammengefaßt. Das Kennfeld 73 ist mit reliefartigen Minus-Zeichen und das Kennfeld 74 mit reliefartigen Plus-Zeichen versehen. Die Oberflächen der Kennfelder 75 und 76 sind jeweils mit einer Riffelung versehen, wobei die Riffelung des Kennfeldes 75 in Längsrichtung der Orientierungsleiste und die Riffelung des Kennfeldes 76 quer dazu verläuft. Die Kennfelder 77, 78 und 79 sind mit unterschiedlichen Noppenmustern versehen, es könnten jedoch auch Kennfelder mit unterschiedlicher Rauhigkeit vorgesehen sein.

Die in den vorstehend beschriebenen Ausführungsbeispielen dargestellten Orientierungsleisten 15, 55 können derart ausgestaltet sein, daß in jedem Kennfeld eine Drucktaste angeordnet ist. Dadurch braucht der Finger nicht vom Kennfeld zur Drucktaste bewegt werden, statt dessen wird auf das Kennfeld selbst ein Druck ausgeübt, um ein Schaltsignal zu erzeugen. Außerdem wird dadurch der Platzbedarf für die Drucktasten unterhalb der Displays eingespart, so daß die Displays selbst größer gestaltet werden können, was der erleichterten Ablesbarkeit dient.

## Patentansprüche

1. Bediengerät (1, 30, 50) für die Steuerung von Einrichtungen und/oder Aggregaten in einem Kraftfahrzeug, insbesondere einer Heizungs- und/oder Klimaanlage, mit mehreren an einer Bedienoberfläche (3, 32, 52) befindlichen Bedienelementen (8, 9, 11, 12, 18, 19, 36 - 39, 58, 59 62, 63, 66 - 68, 71, 72), die mindestens zwei Positionen einnehmen können und mit den Bedienelementen zugeordneten Symbolen zur visuellen Anzeige der Funktion des betreffenden Bedienelementes, dadurch gekennzeichnet,
daß ein unmittelbar an die Bedienelemente (8, 9, 11, 12, 18, 19, 36 - 39, 58, 59, 62, 63, 66 - 68, 71, 72) angrenzender Bereich (15, 55) mit Mitteln zur haptischen Unterscheidung des jeweiligen Bedienelementes versehen ist, wobei an der Bedienoberfläche (3, 52) eine Orientierungsleiste (15, 55) angeordnet ist, die mit den Bedienelementen (8, 9, 11, 12, 18, 19, 58, 59, 62, 63, 66 - 68) zugeordneten Kennfeldern (20 - 23, 73 - 79) mit haptisch kodierten Oberflächen versehen ist.

2. Bediengerät nach Anspruch 1, dadurch gekennzeichnet,
daß die Orientierungsleiste (15, 55) sich unterhalb der jeweiligen Bedienungselemente (8, 9, 11, 12, 18, 19, 58, 59, 62, 63, 66 - 68) vorzugsweise entlang des unteren Randes der Bedienoberfläche (3, 52) erstreckt.

3. Bediengerät nach Anspruch 1 oder 2, dadurch gekennzeichnet,
daß zwischen den Kennfeldern (20 - 23, 73 - 79) Mittel zur Abgrenzung vorgesehen sind, die vorzugsweise durch leicht erhöhte und im wesentlichen quer zur Längsrichtung der Orientierungsleiste (55) verlaufende Stege (70) gebildet sind.

4. Bediengerät nach einem der vorhergehenden Ansprüche, dadurch gekennzeichnet,
daß zur Kodierung der Oberflächen an den Bedienelementen (36 - 39) oder Kennfeldern (20 - 23 und 73 - 79) eine charakteristische Struktur bspw. durch Rauhigkeit, ein Muster oder Richtung eines Musters vorgesehen ist.

5. Bediengerät nach einem der vorhergehenden Ansprüche, dadurch gekennzeichnet,
daß die Kodierung der Oberflächen durch deutlich unterschiedliche Temperaturen an den Oberflächen benachbarter Drucktasten (8, 9, 17, 19, 36, 37, 36', 37' 58, 59) oder Kennfelder (20, 21, 20', 21', 73, 74) erfolgt, wobei vorzugsweise zur Erzeugung unterschiedlicher Temperaturen an den Oberflächen ein Peltier-Element vorgesehen ist.

6. Bediengerät nach Anspruch 1, dadurch gekennzeichnet,
daß die Bedienelemente (8, 9, 11, 12, 18, 19, 36 - 39, 58, 59, 62, 63, 66 - 68, 71, 72) selbst zusätzlich eine haptisch kodierte Oberfläche aufweisen, wobei vorzugsweise zumindest ein Teil der Bedienelemente als Drucktasten mit einer charakteristischen Frontfläche ausgebildet sind, oder zumindest eines der Bedienelemente als Drehknopf mit einer partiell kodierten Teilfläche ausgebildet ist.

7. Bediengerät nach Anspruch 6, dadurch gekennzeichnet,
daß einem oder mehreren Bedienelementen ein Display (7, 10, 17, 33 - 35, 57, 60, 61, 69) zugeordnet ist, in dem die eingestellte Funktion angezeigt wird und zwei benachbarte Drucktasten (8, 9, 18, 19, 36, 37, 36', 37', 58, 59, 62, 63) derselben Funktion mit gegenläufiger Verstellung zugeordnet sind, wobei insbesondere zur Kodierung der Drucktasten (36, 37, 36', 37') die Frontfläche einer Drucktaste (37, 37') mit einer konkaven Vertiefung (41) und die Frontfläche der anderen Drucktaste (36, 36') mit einer konvexen Wölbung (40) versehen sind.

8. Bediengerät nach Anspruch 7, dadurch gekennzeichnet,
daß die Drucktasten (8, 9, 18, 19, 36, 37, 36', 37', 58, 59) als Sollwertsteller zur Temperatureinstellung dienen, denen als Display (7, 17, 33, 34, 57) eine digitale Temperaturanzeige zugeordnet ist.

9. Bediengerät nach Anspruch 8, dadurch gekennzeichnet,
daß zwei Anordnungen von Drucktasten (8, 9, 18, 19, 36, 37, 36', 37') und Temperaturanzeige (7, 17, 33, 34) für die Temperatureinstellung vorgesehen sind, wobei eine Anordnung (7, 8, 9; 33, 36, 37) zur Einstellung des Heizungs- bzw. Klimatisierungsbedarfs für die Fahrerseite und die andere Anordnung (17, 18, 19, 34, 36' 37') für die Beifahrerseite dient.

10. Bediengerät nach einem der vorhergehenden Ansprüche, dadurch gekennzeichnet,
daß die Bedienoberfläche (3, 32, 52) in zwei Bedienbereiche (4, 5, 53, 54) unterteilt ist, wobei jeder Bedienbereich im wesentlichen eine Ebene bildet und die beiden Ebenen in einem Winkel (α) zueinander angeordnet sind, wobei vorzugsweise die Berührungslinie (6, 56) beider Ebenen im wesentlichen vertikal verläuft und der Winkel (α) zwischen den Vorderseiten der Ebenen ca. 185° bis 200° beträgt.

11. Bediengerät nach Anspruch 2, dadurch gekennzeichnet,
daß die Orientierungsleiste (15, 55) zumindest in einem wesentlichen Abschnitt ihrer Längserstreckung eine keilförmige Oberfläche aufweist.

12. Bediengerät nach Anspruch 1 oder 11, dadurch gekennzeichnet,
daß die Orientierungsleiste (15, 55) und die Bedienoberfläche (3, 52) einen Winkel (β) von ca. 100° bis 140° zwischen sich einschließen.

## Claims

1. A control unit (1, 30, 50) to control devices and/or units in a motor vehicle, in particular a heating and/or air conditioning system, with several control elements (8, 9, 11, 12, 18, 19, 36 - 39, 58, 59, 62, 63, 66 - 69, 71, 72) located on a control surface which can assume at least two positions and with symbols assigned to the control elements to display the function of the respective control elements, characterised in that an area (15, 55) directly adjoining the control elements (8, 9, 11, 12, 18, 19, 36 - 39, 58, 59, 62, 63, 66 - 69, 71, 72) is provided with means for the haptical differentiation of the various control elements, an orientation strip (15, 55) being positioned on the control surface (3, 52) and provided with identification fields (20 - 23, 73 - 79) assigned to the control elements (8, 9, 11, 12, 18, 19, 36 - 39, 58, 59, 62, 63, 66 - 69, 71, 72) with haptically coded surfaces.

2. A control unit in accordance with Claim 1, characterised in that the orientation strip (15, 55) extends beneath the various control elements (8, 9, 11, 12, 18, 19, 58, 59, 62, 63, 66 - 69) preferably along the lower edge of the control surface (3, 52).

3. A control unit in accordance with Claims 1 or 2, characterised in that means of delimitation are provided between the identification fields (20 - 23, 73 - 79), preferably formed by webs (70) which are slightly raised and run essentially transversely to the longitudinal direction of the orientation strip (55).

4. A control unit in accordance with one of the preceding claims, characterised in that a characteristic structure, e.g. roughness, a pattern or a direction of a pattern, is provided to code the surfaces on the control elements (36 - 39) or identification fields (20 - 23 and 73 - 79).

5. A control unit in accordance with one of the preceding claims, characterised in that the coding of the surfaces is achieved by means of clearly different temperatures on the surfaces of adjacent push-button keys (8, 9, 17, 19, 36, 37, 36', 37', 58, 59) or identification fields (20, 21, 20', 21', 73, 74), preferably with a Peltier element being provided to generate different temperatures on the surfaces.

6. A control unit in accordance with Claim 1, characterised in that the control elements (8, 9, 11, 12, 18, 19, 36 - 39, 58, 59, 62, 63, 66 - 69, 71, 72) themselves also have haptically coded surfaces, whereby preferably at least some of the control elements are designed as press-button keys with a characteristic front surface, or at least one of the control elements is designed as a turning knob with a partially coded part surface.

7. A control element in accordance with Claim 6, characterised in that assigned to one or more control elements is a display (7, 10, 17, 33 - 35, 57, 60, 62, 69) in is displayed the function which has been set, and two adjacent push-button keys (8, 9, 18, 19, 36, 37, 36', 37', 58, 59, 62, 63) are assigned to the same function with adjustment in opposite directions, whereby the front surface of one push-button key (37, 37') is provided with a concave depression (41) and the front surface of the other pushbutton key (36, 36') is provided with a convex bulge (40) in particular for the coding of the push-button keys (36, 37, 36', 37').

8. A control unit in accordance with Claim 7, characterised in that the push-button keys (8, 9, 18, 19, 36, 37, 36', 37', 58, 59), to which a digital temperature indicator is assigned as a display (7, 17, 33, 34, 57), serve as set-point actuators for adjusting the temperature.

9. A control unit in accordance with Claim 8, characterised in that two arrangements of push-button keys (8, 9, 18, 19, 36, 37, 36', 37') and a temperature indicator (7, 17, 33, 34) are provided for adjusting the temperature, one arrangement (7, 8, 9; 33, 36, 37) serving to adjust the heating or air conditioning requirement for the driver's side and the other arrangement (17, 18, 19, 34, 36', 37') the heating or air conditioning requirement for the front seat passenger's side.

10. A control unit in accordance with one of the preceding claims, characterised in that the control surface (3, 32, 52) is divided into two control areas (4, 5, 53, 54), each control area essentially forming one plane and the two planes being positioned at an angle (α) to each other, whereby the contact line (6, 56) between the two planes preferably runs essentially vertically and the angle (α) between the fronts of the planes is approx. 185° to 200°.

11. A control unit in accordance with Claim 2, characterised in that the orientation strip (15, 55) has a wedge-shaped surface over at least one significant section of its longitudinal extent.

12. A control unit in accordance with Claim 1 or Claim 11, characterised in that the orientation strip (15, 55) and the control surface (3, 52) between them form an angle (β) of approx. 100° to 140°.

## Revendications

1. Appareil de commande (1,30,50) pour la commande de dispositifs et/ou d'unités dans un véhicule automobile, notamment d'une installation de chauffage et/ou de climatisation, comportant plusieurs éléments de commande (8,9,11,12,18,19,36 - 39,58,59,62,63,66 - 68,71,72) situés sur une surface de commande (3,32,52) et qui peuvent prendre au moins deux positions, et comportant des symboles qui sont associés aux éléments de commande et servent à réaliser l'affichage visuel du fonctionnement de l'élément de commande considéré, caractérisé en ce
qu'il est prévu une zone (15,55), qui jouxte directement les éléments de commande (8,9,11,12,18,19,36 - 39,58,59,62, 63,66 - 68,71,72) et comporte des moyens pour une différentiation haptique de l'élément de commande respectif, tandis que sur la surface de commande (3,52) est disposée une barrette d'orientation (15,55) qui est équipée de panneaux d'identification (20 - 23, 76 - 79) qui sont associés aux éléments de commande (8,9,11,12,18,19,58,59,62,63,66-68) et comportent des surfaces codées selon un codage haptique.

2. Appareil de commande selon la revendication 1, caractérisé en ce que
la barrette d'orientation (15,55) s'étend au-dessous des éléments de commande respectifs (8,9,11,12,18,19,58,59,62, 63,66 - 68) de préférence le long du bord inférieur de la surface de commande (3,52).

3. Appareil de commande selon la revendication 1 ou 2, caractérisé en ce que
qu'entre les panneaux d'identification (20 - 23, 73 - 79) sont prévus des moyens de limitation, qui sont formés de préférence par des baguettes (70) qui sont légèrement surélevées et s'étendent essentiellement transversalement par rapport à la direction longitudinale de la barrette d'orientation (55).

4. Appareil de commande selon l'une des revendications précédentes, caractérisé en ce
que pour le codage des surfaces situées entre les éléments de commande (36 - 39) ou les panneaux d'identification (20 - 23) et (73 - 79) il est prévu une structure caractéristique, formée par exemple par une rugosité, un motif ou une direction d'un motif.

5. Appareil de commande selon l'une des revendications précédentes, caractérisé en ce
que le codage des surfaces s'effectue au moyen de températures nettement différentes au niveau des surfaces de boutons-poussoirs voisins (8,9,17,19,36,37,36',37',58,59) ou de panneaux d'identification voisins (20,21,20',21',73, 74), un élément Peltier étant prévu de préférence pour produire des températures différentes au niveau des surfaces.

6. Appareil de commande selon la revendication 1, caractérisé en ce
que les éléments de commande (8,9,11,12,18,19,36 - 39,58, 59,62,63,66 - 68,71,72) possèdent même en supplément une surface codée selon un codage haptique, auquel cas de préférence au moins une partie des éléments de commande sont agencés sous la forme de boutons-poussoirs possédant une face avant caractéristique, ou qu'au moins l'un des éléments de commande est agencé sous la forme d'un bouton rotatif comportant une surface partiellement codée.

7. Appareil de commande selon la revendication 6, caractérisé en ce
qu'un ou plusieurs éléments de commande est associé à un dispositif d'affichage (7,10,17,33-35,57,60,61,69), dans lequel la fonction réglée est affichée, et que deux boutons-poussoirs voisins (8,9,18,19,36,37,36',37',58,59, 62,63) sont associés à la même fonction avec des déplacements antagonistes, auquel cas notamment pour le codage des boutons-poussoirs (36,37,36',37'), la surface avant d'un bouton-poussoir (37,37') est pourvue d'un renfoncement concave (41) et la surface avant de l'autre bouton-poussoir (36,36') est pourvue d'une partie cintrée convexe (40).

8. Appareil de commande selon la revendication 7, caractérisé en ce
que les boutons-poussoirs (8,9,18,19,36,37,36',37',58,59) sont utilisés en tant que régulateurs de valeurs de consigne pour régler la température, auxquels est associé, en tant que dispositif d'affichage (7,17,33,34,57), un dispositif d'affichage numérique de température.

9. Appareil de commande selon la revendication 8, caractérisé en ce
qu'il est prévu deux ensembles de boutons-poussoirs (8,9, 18,19,36,37,36',37') et de dispositifs d'affichage de température (7,17,33,34) pour le réglage de la température, un dispositif (7,8,9; 33,36,37) pour le réglage du besoin en chauffage et en climatisation est utilisé pour le réglage des besoins en chauffage et en climatisation pour le côté conducteur et l'autre dispositif (17,18,19,34,36', 37') est utilisé pour le besoin en chauffage et en climatisation pour le côté passager.

10. Appareil de commande selon l'une revendications précédentes, caractérisé en ce
que la surface de commande (3,32,52) est subdivisée en deux zones de commande (4,5,53,54), chaque zone de commande formant essentiellement un plan et les deux plans étant disposés en faisant entre eux un angle (α), la ligne de contact (6,56) des deux plans s'étendant de préférence essentiellement verticalement tandis que l'angle (α) entre les faces avant des plans est compris entre environ 185° et 200°.

11. Appareil de commande selon la revendication 2, caractérisé en ce
que la barrette d'orientation (15,55) possède une surface en coin, au moins dans une partie essentielle de son étendue en longueur.

12. Appareil de commande selon la revendication 1 ou 11, caractérisé en ce
que la barrette d'orientation (15,55) et la surface de commande (3,52) font entre elles un angle (β) compris entre environ 100° et 140°.
